# EUROPEAN PATENT APPLICATION

(11) **EP 4 832 257 A1**
(43) Date of publication of application: **28.10.2026**
(21) Application number: 24919934.0
(22) Date of filing: 10.12.2024
(51) Int. Cl.: H01R 13/02, H01M 50/502, H01M 50/543

(54) **CONNECTOR, BATTERY, ENERGY STORAGE SYSTEM AND ELECTRIC DEVICE**

(30) Priority: 24.01.2024 CN 202420175694 U
(71) Applicant: Contemporary Amperex Technology Co., Limited, Ningde, Fujian 352100 (CN)
(72) Inventor: KANG, Hairong, Ningde, Fujian 352100 (CN); HE, Jia, Ningde, Fujian 352100 (CN)
(74) Representative: Ziebig Hengelhaupt Intellectual Property Attorneys Patentanwaltskanzlei PartGmbB
(86) International application number: PCT/CN2024/138207
(87) International publication number: WO 2025/156856

(57) **Abstract**

The present application is suitable for the technical field of electrics, and provides a connector, a battery, an energy storage system and an electric device. The energy storage system and the electric device each comprise a battery, the battery comprises a connector, the connector comprises a housing and a plurality of terminals, and the plurality of terminals are arranged in the housing in parallel. By arranging a plurality of parallel terminals in a housing of a connector, when in use, the connector allows current to flow through the plurality of terminals in parallel, to supply power to an electric device, that is, the connector can be powered by means of a plurality of branches. In this way, the connector can handle a large current, thereby achieving high-current power transmission.

## Description

### CROSS-REFERENCE TO RELATED APPLICATIONS

The present application claims priority to the Chinese patent application with application No. 202420175694.1 and application title "CONNECTOR, BATTERY, ENERGY STORAGE SYSTEM, AND ELECTRIC DEVICE" filed with the National Intellectual Property Administration of the People's Republic of China on January 24, 2024, which is incorporated herein by reference in its entirety.

### TECHNICAL FIELD

The present application relates to the technical field of electrical engineering, and in particular to a connector, a battery, an energy storage system, and an electric device.

### BACKGROUND

In the related art, a battery is usually provided with a connector, so that electrical power of the battery can be supplied to an electric device via the connector.

In some cases, the current-carrying capacity of the connector is insufficient, and high-current conduction cannot be realized.

### SUMMARY

In view of the above problems, an objective of embodiments of the present application is to provide a connector, a battery, an energy storage system, and an electric device, so as to solve the problem of insufficient current-carrying capacity of the connector.

The technical solutions adopted in the embodiments of the present application are as follows:

According to a first aspect, an embodiment of the present application provides a connector, including:
a housing; and
a plurality of terminals arranged in parallel inside the housing.

The connector provided in the embodiments of the present application allows current to flow in parallel via the plurality of terminals to supply power to an electric device during operation by arranging the plurality of terminals connected in parallel inside the housing of the connector, that is, the connector conducts current via a plurality of branches. In this way, the connector can withstand a large current and can achieve the effect of high-current conduction.

In some embodiments, the connector further includes a conductive connecting member, and the conductive connecting member connects the plurality of terminals to arrange the plurality of terminals in parallel.

By arranging the conductive connecting member, the plurality of terminals are arranged in parallel, so that the connector conducts current via a plurality of branches to achieve the effect of high-current conduction.

In some embodiments, a cross-sectional area of the conductive connecting member is greater than or equal to a sum of cross-sectional areas of the plurality of terminals.

By setting the cross-sectional area of the conductive connecting member to be greater than or equal to the sum of the cross-sectional areas of the plurality of terminals, the conductive connecting member has a relatively large current-carrying capacity, and the current-carrying capacity of the conductive connecting member is greater than or equal to the current-carrying capacity of the plurality of terminals. Therefore, the connector conducts current via a plurality of branches, so that the connector can withstand a large current and can achieve the effect of high-current conduction.

In some embodiments, the conductive connecting member and the terminals are in surface contact and connected to each other.

The surface contact between the conductive connecting member and the terminals enables a joint between the conductive connecting member and the terminal to have a relatively large current-carrying capacity.

In some embodiments, both the conductive connecting member and the terminal are sheet-shaped, and a portion of the terminal and a portion of the conductive connecting member are sequentially disposed and connected along a thickness direction of the terminal.

In this way, surface contact is formed between the terminals and the conductive connecting member, and a large contact area is provided between the conductive connecting member and the terminals. In this way, a joint between the conductive connecting member and the terminals has a relatively large current-carrying capacity, which helps to improve the current-carrying capacity of the connector.

In some embodiments, the conductive connecting member and the terminal are formed as separate components or an integral structure.

Such arrangement enables the conductive connecting member and the terminals to be formed separately, that is, the conductive connecting member and the terminals can be designed according to their respective requirements, which helps to improve the current-carrying capacity of the connector.

Alternatively, it facilitates the molding of the connector.

In some embodiments, the conductive connecting member and the terminals are formed as separate components, and the conductive connecting member and the terminals are connected by welding and/or riveting and/or bolting.

By adopting the above technical solution, the separate connection between the conductive connecting member and the terminals is simple in structure, easy to implement and highly reliable.

In some embodiments, the conductive connecting member and/or the terminal is a copper busbar.

The design of the conductive connecting member being a copper busbar enables the conductive connecting member to have a relatively large current-carrying capacity, facilitates the formation of parallel connection of the plurality of terminals, and facilitates improvement of the current-carrying capacity of the connector.

The design of the terminal being a copper busbar enables the terminal to have a relatively large current-carrying capacity, which in turn can improve the current-carrying capacity of the connector.

In some embodiments, the conductive connecting member includes a first conductive portion and a plurality of second conductive portions, where the plurality of second conductive portions are arranged at intervals on the first conductive portion; and each second conductive portion is correspondingly connected to each of the terminals.

Such arrangement facilitates conduction between the conductive connecting member and the terminal.

In some embodiments, the terminal includes:
a main body portion arranged on the housing; and
a plurality of elastic portions arranged at intervals on the main body portion and capable of elastic deformation.

By arranging the plurality of elastic portions on the terminals, the connector can elastically abut against a conductive component of a second connector via the elastic portions, which can improve the reliability and stability of conduction between the terminals and the conductive component of the second connector, namely, can improve the reliability and stability of mating conduction between the connector and the second connector.

In some embodiments, the housing is an insulating structure.

Such arrangement enables the housing to provide insulation protection for the terminal.

In some embodiments, the terminal is provided with a barb, a clamping groove is formed in the housing, and the barb is clamped inside the clamping groove; and the housing is provided with an insertion slot, at least a portion of the terminal is arranged in the insertion slot, and the clamping groove is formed on an inner wall of the insertion slot.

Such arrangement achieves securing of the terminals on the housing.

According to a second aspect, an embodiment of the present application provides a battery, including a connector, where the connector is configured to transmit electrical power of the battery.

The battery provided in the embodiments of the present application can achieve the effect of high-current power supply by adopting the foregoing connector.

According to a third aspect, an embodiment of the present application provides an energy storage system, including a control device and a battery, where the control device is electrically connected to the connector of the battery.

The energy storage system provided in the embodiments of the present application enables the connector to achieve the effect of high-current conduction by adopting the foregoing battery, which enables the energy storage system to supply a larger current and power to an electric device. In addition, the control device can control the battery to supply power to the electric device.

In some embodiments, the number of the batteries is multiple, and the plurality of batteries are electrically connected through the connector to form a battery assembly; the battery assembly has a total positive terminal and a total negative terminal, the control device is electrically connected to the total positive terminal and the total negative terminal, and the total positive terminal and/or the total negative terminal is the connector.

Such arrangement enables the control device to control the plurality of batteries to supply power to the electric device.

According to a fourth aspect, an embodiment of the present application provides an electric device, including a battery.

The electric device provided in the embodiments of the present application enables the battery of the electric device to achieve the effect of supplying a large current to the electric device by adopting the foregoing battery.

The above description is merely an overview of the technical solutions of the present application. For a clearer understanding of the technical means of the present application, the technical means can be implemented in accordance with the content of the description. To make the above and other objectives, features, and advantages of the present application more obvious and understandable, specific embodiments of the present application are specifically described below.

### BRIEF DESCRIPTION OF DRAWINGS

In order to illustrate the technical solutions in the embodiments of the present application more clearly, the accompanying drawings required to be used in the embodiments or exemplary technical descriptions will be briefly introduced below. Obviously, the accompanying drawings in the following description are only some embodiments of the present application. For those of ordinary skill in the art, other drawings can be obtained according to these drawings without undue experimentation.
FIG. 1 is a schematic diagram of a vehicle according to some embodiments of the present application;
FIG. 2 is an exploded schematic view of a battery according to some embodiments of the present application;
FIG. 3 is a schematic diagram of an energy storage system according to some embodiments of the present application;
FIG. 4 is a schematic diagram of a connector according to some embodiments of the present application;
FIG. 5 is a top view of the connector provided in FIG. 4; and
FIG. 6 is a partial schematic diagram of a connector according to some embodiments of the present application.

The reference signs in the figures are as follows:
1000. energy storage system; 2000. vehicle; 100. battery; 200. controller; 300. motor; 400. second connector; 500. control device; 10. connector; 101. first mounting hole; 102. second mounting hole; 103. insertion slot; 11. housing; 12. terminal; 121. main body portion; 122. elastic portion; 123. barb; 13. conductive connecting member; 131. first conductive portion; 132. second conductive portion; 14. fastener; 20. battery cell; 30. box body; 301. accommodating space; 31. first section; 32. second section; 40. positive transmission terminal; 40a. total positive terminal; 50. negative transmission terminal; 50a. total negative terminal; Z. first direction; Y. second direction; and X. third direction.

### DESCRIPTION OF EMBODIMENTS

The embodiments of the present application are described in detail below. Examples of the embodiments are shown in the accompanying drawings, where the same or similar reference numerals throughout represent the same or similar elements or elements with the same or similar functions. The embodiments described below with reference to the accompanying drawings are exemplary and are intended to explain the present application, but should not be construed as limiting the present application.

In the description of the present application, it should be understood that the orientation or positional relationship indicated by the terms "length", "width", "upper", "lower", "front", "rear", "left", "right", "vertical", "horizontal", "top", "bottom", "inner", "outer", and the like is based on the orientation or positional relationship shown in the accompanying drawings, which is only for the convenience of describing the present application and simplifying the description, and does not indicate or imply that the device or element referred to must have a specific orientation, be constructed and operated in a specific orientation, and therefore shall not be construed as a limitation on the present application.

In addition, the terms "first" and "second" are used for descriptive purposes only and cannot be understood as indicating or implying relative importance or implicitly indicating the number of technical features indicated. Thus, a feature defined as "first" or "second" may explicitly or implicitly include one or more of such features.

In the description of the present application, the meaning of "plurality" is two or more, unless otherwise clearly and specifically defined, and "two or more" includes two. Accordingly, the meaning of "a plurality of groups" is two or more groups, including two groups.

In the description of the present application, unless otherwise clearly specified and limited, the terms "mount", "connect", "link", "secure", and other terms shall be interpreted broadly. For example, it may be a secured connection, a detachable connection, or an integral connection; it may be a mechanical connection or an electrical connection; it may be a direct connection or an indirect connection via an intermediate medium, and it may be the internal communication of two elements or the interaction relationship between two elements. For those of ordinary skill in the art, the specific meanings of the above terms in the present application can be understood according to specific circumstances.

In the description of the present application, the term "and/or" is merely a description of an association relationship of associated objects, indicating that three relationships can exist. For example, A and/or B may mean: A exists alone, both A and B exist, and B exists alone. In addition, in the present application, the character "/" generally indicates that the front and rear associated objects are in an "or" relationship.

Although the present application has been described with reference to the preferred embodiments, various improvements can be made to the present application and equivalent components may be substituted without departing from the scope of the present application. In particular, as long as there is no structural conflict, the technical features mentioned in the various embodiments can be combined in any manner. The present application is not limited to the specific embodiments disclosed herein, but includes all technical solutions falling within the scope of the claims.

In the related art, an energy storage system refers to a system used for energy storage and capable of supplying power to an electric device. An energy storage system usually includes a battery, the battery is provided with a connector, and the connector is configured to transmit electrical power of the battery. In this way, the electrical power of the battery can be supplied to the electric device via the connector.

In some cases, the connector may be connected to a control device such as a high-voltage box, a main control box, or a control cabinet outside the battery. In this way, by connecting the electric device to the control device, the control device may control the battery to supply power to the electric device. Alternatively, in other cases, the connector may be connected to the electric device so that the battery supplies power to the electric device.

However, the connector has insufficient current-carrying capacity, so that high-current conduction cannot be achieved. Specifically, the connector is usually provided with only one branch, that is, the connector conducts current via only a single branch, its insufficient current-carrying capacity makes it unable to conduct a large current.

Based on the above considerations, the embodiments of the present application provide a connector, a battery, an energy storage system, and an electric device. By arranging a plurality of terminals connected in parallel inside a housing of the connector, current can flow in parallel via the plurality of terminals to supply power to the electric device during operation of the connector, that is, the connector conducts current via a plurality of branches. In this way, the connector can withstand a large current and can achieve the effect of high-current conduction.

In some embodiments, the connector and the battery according to the embodiments of the present application can be used in an energy storage system that uses a battery for energy storage, so that the battery supplies power to an electric device. The energy storage system may be, but is not limited to, an energy storage container and an energy storage cabinet.

In some other embodiments, the connector and the battery according to the embodiments of the present application can be used in an electric device that uses a battery as a power source, so that the battery supplies power to the electric device.

The electric device according to the embodiments of the present application may be, but is not limited to, a mobile phone, a tablet, a laptop computer, an electric toy, an electric tool, an electric bicycle, a vehicle, a watercraft, and a spacecraft. The electric toy may include a secured or mobile electric toy, for example, a game console, an electric car toy, an electric boat toy, an electric airplane toy, and the like. The spacecraft may include an airplane, a rocket, a space shuttle, a spaceship, and the like. According to the power source, the vehicle may be a fuel vehicle, a gas vehicle or a new energy vehicle, and the new energy vehicle may be a battery electric vehicle, a hybrid electric vehicle, an extended-range electric vehicle, or the like. According to the driving mode, the vehicle may be a front-wheel drive vehicle, a rear-wheel drive vehicle, or a four-wheel drive vehicle.

The battery according to the embodiments of the present application may be a single physical module including one battery cell or a plurality of battery cells to provide higher voltage and capacity. When there are a plurality of battery cells, the plurality of battery cells are connected in series, in parallel, or in a hybrid connection through a busbar assembly, where the hybrid connection means that there are both series and parallel connections among the plurality of battery cells.

In some embodiments, the battery may be a battery module. A plurality of battery cells are arranged and secured to form a battery module. As an example, a plurality of battery cells may be secured by straps or the like to form a battery module. As an example, a plurality of battery cells may alternatively be secured by end plates, side plates, and the like to form a battery module.

In some other embodiments, the battery may be a battery pack, and the battery pack may include a box body and battery cells. As an example, the battery cells may be directly accommodated in the box body. As an example, the battery cells may alternatively be first formed into a battery module and then accommodated in the box body.

The battery cell according to the embodiments of the present application refers to the smallest unit that stores and outputs electrical power. The battery cell may be a secondary battery or a primary battery. The battery cell may be, but is not limited to, a metal battery, a lithium-sulfur battery, a sodium-ion battery, or a magnesium-ion battery. The battery cell may be configured in a cylindrical shape, flat shape, cuboid shape, or other shapes.

For ease of description, the embodiments of the present application are described by taking a vehicle as an example of an electric device.

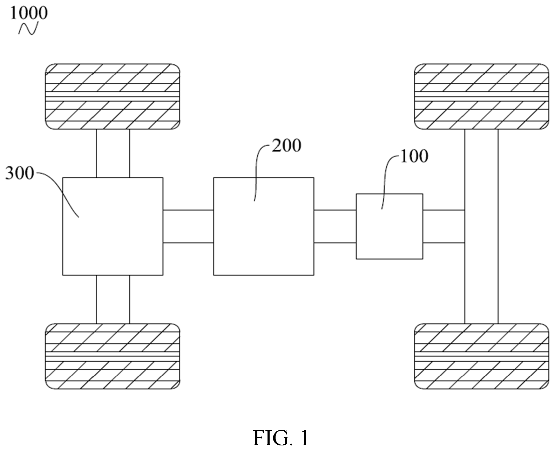

In some embodiments, referring to FIG. 1, FIG. 1 is a schematic diagram of a vehicle 2000 according to some embodiments of the present application. The vehicle 2000 is internally provided with the above-mentioned battery 100, and the battery 100 may be arranged at the bottom, front, or rear of the vehicle 2000. The battery 100 may be configured for power supply of the vehicle 2000. For example, the battery 100 may be configured as an operating power source of the vehicle 2000. The vehicle 2000 may further include a controller 200 and a motor 300. The controller 200 is configured to control the battery 100 to supply power to the motor 300, for example, to meet the working power requirements of the vehicle 2000 during starting, navigation, and driving.

In some embodiments, the battery 100 can function not only as an operating power source of the vehicle 2000, but also as a traction power source of the vehicle 2000, and fully or partially replaces fuel or natural gas to provide driving power for the vehicle 2000.

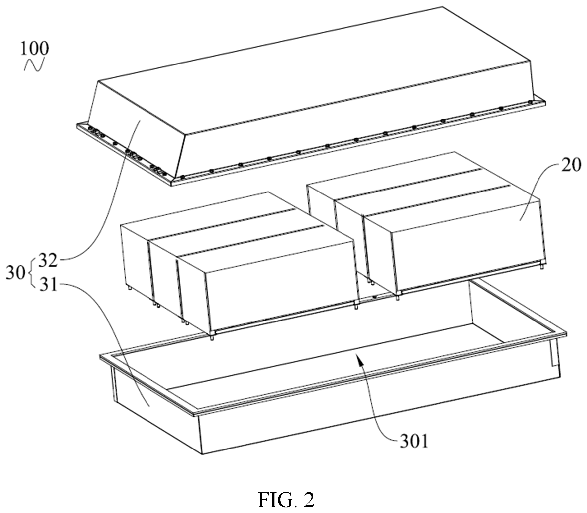

In some embodiments, referring to FIG. 2, FIG. 2 is an exploded view of a battery 100 according to some embodiments of the present application. The battery 100 includes a box body 30 and a plurality of battery cells 20. The box body 30 is a structure with an accommodating space 301 inside, and the box body 30 may adopt a variety of structures. In some embodiments, the box body 30 may include a first section 31 and a second section 32. The first section 31 and the second section 32 cover each other and jointly define the above-mentioned accommodating space 301.

The first section 31 may be a hollow structure with an opening at one end, and the second section 32 may be a plate-like structure. The second section 32 covers the opening side of the first section 31, so that the first section 31 and the second section 32 jointly define the accommodating space 301. Alternatively, referring to FIG. 2, both the first section 31 and the second section 32 may be hollow structures with an opening at one end. The opening side of the first section 31 covers the opening side of the second section 32, so that the first section 31 and the second section 32 jointly define the accommodating space 301.

The box body 30 composed of the first section 31 and the second section 32 may have a variety of shapes, such as a cylinder and a rectangular parallelepiped.

In some embodiments, referring to FIG. 2, a plurality of battery cells 20 may be connected in series, in parallel, or in a hybrid connection to form an integral assembly, and then the integral assembly formed by the plurality of battery cells 20 is directly accommodated in the accommodating space 301 of the box body 30. In some other embodiments, a plurality of battery cells 20 may alternatively be first connected in series, in parallel, or in a hybrid connection, arranged and secured to form a battery module, and the battery module is accommodated in the accommodating space 301 of the box body 30. In still some other embodiments, a plurality of battery cells 20 may alternatively be first connected in series, in parallel, or in a hybrid connection, arranged and secured to form a plurality of battery modules, and the plurality of battery modules are then connected in series, in parallel, or in a hybrid connection to form an integral assembly, and then accommodated in the accommodating space 301 of the box body 30.

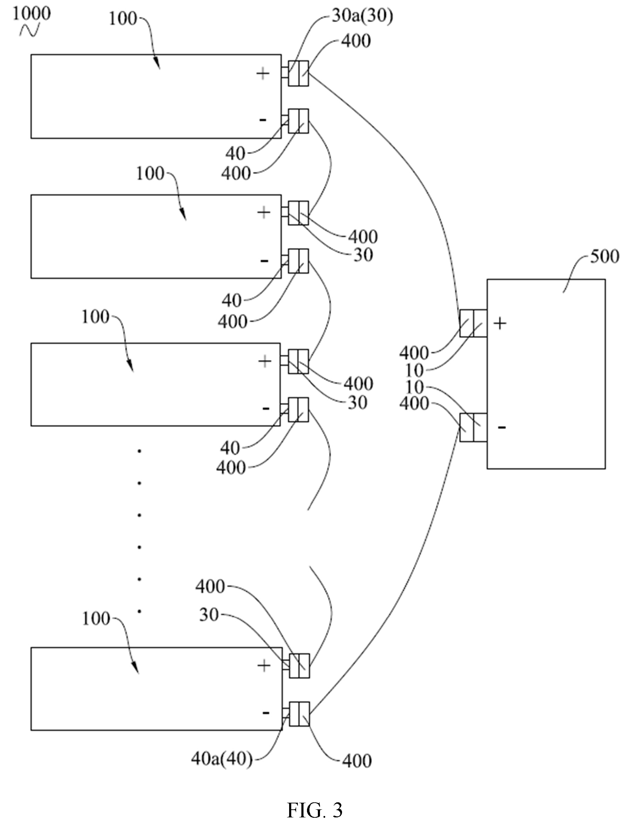

In some embodiments, referring to FIGs. 1 to 3 together, FIG. 3 is a schematic diagram of an energy storage system 1000 according to some embodiments of the present application. The battery 100 includes a connector 10, and the connector 10 is configured to transmit electrical power of the battery 100, so that the electrical power of the battery 100 may supply power to an electric device via the connector 10.

Specifically, continue to refer to FIGs. 1 to 3, the battery 100 has a positive transmission terminal 40 and a negative transmission terminal 50. The positive transmission terminal 40 and the negative transmission terminal 50 respectively serve as current transmission terminals of the battery 100, and both the positive transmission terminal 40 and the negative transmission terminal 50 are configured to transmit electrical power of the battery 100, specifically for outputting or inputting current. Only the positive transmission terminal 40 serves as the connector 10; or only the negative transmission terminal 50 serves as the connector 10; or the positive transmission terminal 40 and the negative transmission terminal 50 respectively serve as the connector 10.

Specifically, the battery 100 further includes a battery cell 20. The positive transmission terminal 40 may be connected to the battery cell 20 via a copper busbar, a copper busbar, or the like, and the negative transmission terminal 50 may be connected to the battery cell 20 via a copper busbar, a copper busbar, or the like.

In some embodiments, continue to refer to FIG. 3, the connector 10 according to the embodiments of the present application is configured to mate with a second connector 400. Specifically, the connector 10 is configured to mate and conduct current with the second connector 400. The connector 10 may be a female connector, and the second connector 400 is a male connector; or the connector 10 may alternatively be a male connector, and the second connector 400 is a female connector. In this way, the connector 10 and the second connector 400 may mate and conduct current. The connector 10 and the second connector 400 may constitute a connector assembly.

When the battery 100 is applied to the vehicle 2000, the connector 10 of the battery 100 may be connected to the controller 200 of the vehicle 2000, so that the controller 200 may control the battery 100 to supply power to the motor 300 and the like.

As an example, the positive transmission terminal 40 of the battery 100 serves as the connector 10, the positive transmission terminal 40 is connected to the corresponding second connector 400, and the second connector 400 is connected to the controller 200. The negative transmission terminal 50 of the battery 100 serves as the connector 10, the negative transmission terminal 50 is connected to the corresponding second connector 400, and the second connector 400 is connected to the controller 200. Based on this, the controller 200 and the battery 100 form a loop, so that the controller 200 may control the battery 100 to supply power to the motor 300 to realize the operation of the vehicle 2000 and the like.

When the battery 100 is applied to the energy storage system 1000, the connector 10 of the battery 100 may be connected to an electric device so that the battery 100 supplies power to the electric device; the connector 10 of the battery 100 may also be connected to the control device 500 so that the control device 500 controls the battery 100 to supply power to the electric device. The specific examples of the battery 100 applied to the energy storage system 1000 may be described in the corresponding parts below and will not be repeated herein.

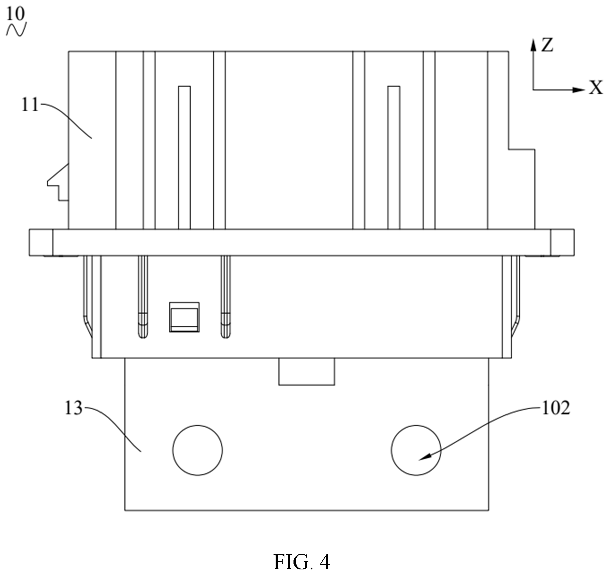

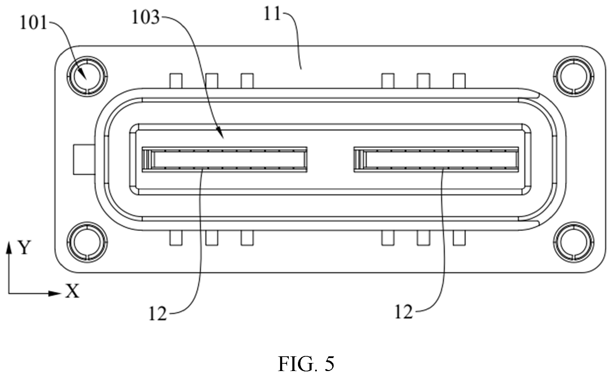

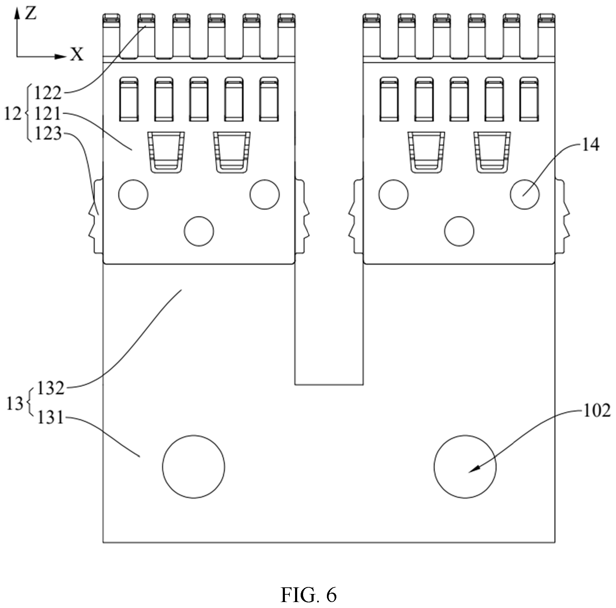

Referring to FIGs. 4 to 6 together and in conjunction with other drawings, FIG. 4 is a schematic diagram of a connector 10 according to some embodiments of the present application, FIG. 5 is a top view of the connector 10 provided in FIG. 4, and FIG. 6 is a partial schematic diagram of a connector 10 according to some embodiments of the present application, specifically a structural schematic diagram of the connector 10 provided in FIG. 4 excluding the housing 11. The connector 10 provided in the embodiments of the present application includes a housing 11 and a plurality of terminals 12. The plurality of terminals 12 are arranged inside the housing 11, and the plurality of terminals 12 are arranged in parallel.

The housing 11 is an outer shell structure of the connector 10 and is configured to mount the terminals 12.

As an example, the housing 11 of the connector 10 may be mounted on the box body 30 of the battery 100. Specifically, as shown in FIG. 5, the housing 11 is provided with a first mounting hole 101, the housing 11 is mounted on the box body 30 via the first mounting hole 101, and the first mounting hole 101 is spaced from the terminals 12.

The terminals 12 are conductive components of the connector 10. The materials of the terminals 12 may be metal materials such as silver-plated copper, zinc-plated copper, copper, aluminum, and iron. When the connector 10 and the second connector 400 mate and conduct current, the terminals 12 and the conductive component of the second connector 400 mate and conduct current to realize the mating conduction between the connector 10 and the second connector 400.

As an example, the terminals 12 of the connector 10 may also be electrically connected to the battery cell 20 of the battery 100 via a copper busbar, a copper busbar, or the like, so that the connector 10 serves as the positive transmission terminal 40 or the negative transmission terminal 50 of the battery 100. When the positive transmission terminal 40 and the negative transmission terminal 50 of the battery 100 each serve as the connector 10, the terminals 12 of the positive transmission terminal 40 are connected to the battery cell 20, and the terminals 12 of the negative transmission terminal 50 are also connected to the battery cell 20.

It should be noted here that when the connector 10 is in use, current passes through the terminals 12 of the connector 10. Each terminal 12 forms an independent branch, and the branch is configured to conduct current. The arrangement of the plurality of terminals 12 enables the connector 10 to have a plurality of branches arranged in parallel, so that current can pass through the plurality of branches.

In some possible designs, as shown in FIG. 6, the plurality of terminals 12 are arranged at intervals. In some other possible designs, the plurality of terminals 12 are connected and arranged in sequence.

The connector 10 provided in the embodiments of the present application allows current to flow in parallel via the plurality of terminals 12 to supply power to an electric device during operation by arranging the plurality of terminals 12 connected in parallel inside the housing 11 of the connector 10, that is, the connector 10 conducts current via a plurality of branches. In this way, the connector 10 can withstand a large current and can achieve the effect of high-current conduction, so that the connector 10 can be applied to high-voltage and high-current application occasions.

In addition, by arranging the plurality of terminals 12 in parallel, the connector 10 can be applied to high-voltage current application occasions, the process is simple, the cost is low, and it is easy to implement.

In some examples, as shown in FIGs. 4 to 6, the number of the terminals 12 is two, and the two terminals 12 are arranged in parallel inside the housing 11. Based on this, the connector 10 has two branches for conducting current, so that the connector 10 has an ultra-large current-carrying capacity of more than 1000 A.

In some embodiments, as shown in FIGs. 4 to 6, the material of the housing 11 may be, but is not limited to, plastic, so that the housing 11 is an insulating structure. At least a portion of the terminal 12 is arranged in the housing 11, so that the housing 11 realizes insulation protection for the terminal 12.

In some embodiments, referring to FIGs. 4 to 6 together and in conjunction with other drawings, the connector 10 further includes a conductive connecting member 13, where the conductive connecting member 13 connects the plurality of terminals 12 to arrange the plurality of terminals 12 in parallel.

The conductive connecting member 13 refers to a component with conductive capability. The material of the conductive connecting member 13 may be a metal material such as copper silver-plated, copper zinc-plated, copper, aluminum, and iron.

The conductive connecting member 13 is connected to the terminal 12, so that the conductive connecting member 13 and the terminals 12 conduct current. The conductive connecting member 13 is connected to the plurality of terminals 12, so that the plurality of terminals 12 are arranged in parallel.

By arranging the conductive connecting member 13, the plurality of terminals 12 are arranged in parallel, so that the connector 10 conducts current via a plurality of branches to achieve the effect of high-current conduction. Moreover, by arranging the conductive connecting member 13 to arrange the plurality of terminals 12 in parallel, the structure of the connector 10 may be simple, the cost is low, and it is easy to implement.

It should be additionally noted herein that the conductive connecting member 13 may be electrically connected to the battery cell 20 of the battery 100 via a copper busbar, a copper busbar, or the like, so that the connector 10 serves as the positive transmission terminal 40 or the negative transmission terminal 50 of the battery 100 to realize indirect connection between the terminal 12 and the battery cell 20. When the positive transmission terminal 40 and the negative transmission terminal 50 of the battery 100 each serve as the connector 10, the conductive connecting member 13 of the positive transmission terminal 40 is electrically connected to the battery cell 20, and the conductive connecting member 13 of the negative transmission terminal 50 is also electrically connected to the battery cell 20.

Current may flow from the battery cell 20 to the conductive connecting member 13 that serves as the positive transmission terminal 40 of the connector 10, and then flow to the plurality of terminals 12 separately, that is, the terminals 12 receive the current of the conductive connecting member 13. The current may alternatively first flow to the plurality of terminals 12 and then converge and flow to the conductive connecting member 13 that serves as the negative transmission terminal 50 of the connector 10, that is, the conductive connecting member 13 receives the current of the terminals 12.

As an example, as shown in FIG. 4 and FIG. 6, the conductive connecting member 13 is provided with a second mounting hole 102, and the conductive connecting member 13 may be connected to a copper busbar, a copper busbar, or the like of the battery 100 via the second mounting hole 102. The second mounting hole 102 is spaced from the terminal 12, the second mounting hole 102 is spaced from the first mounting hole 101, and the first mounting hole 101 is spaced from the conductive connecting member 13.

In some embodiments, referring to FIG. 4, at least a portion of the conductive connecting member 13 is exposed outside the housing 11, so that the conductive connecting member 13 may be connected to a copper busbar, a copper bar, or the like of the battery 100. Specifically, the portion of the conductive connecting member 13 with the second mounting hole 102 is exposed outside the housing 11.

In some embodiments, as shown in FIGs. 4 to 5, among the terminals 12 and the conductive connecting member 13, only the terminals 12 are secured to the housing 11, and the conductive connecting member 13 is secured along with the terminals 12. Alternatively, in some other embodiments, among the terminals 12 and the conductive connecting member 13, only the conductive connecting member 13 is secured to the housing 11, and the terminals 12 are secured along with the conductive connecting member 13. Alternatively, in still some other embodiments, both the terminals 12 and the conductive connecting member 13 are secured to the housing 11.

Specifically, as shown in FIGs. 4 to 6, the terminal 12 is provided with a barb 123, and a clamping groove is formed in the housing 11. When at least a portion of the terminal 12 is mounted in the housing 11, the barb 123 of the terminal 12 is clamped inside the clamping groove of the housing 11 to achieve securing of the terminal 12 on the housing 11.

In some embodiments, the housing 11 is provided with an insertion slot 103, at least a portion of the terminal 12 is arranged in the insertion slot 103, and the clamping groove is formed on an inner wall of the insertion slot 103. Based on this, when the connector 10 and the second connector 400 mate and conduct current, at least a portion of the second connector 400 may be inserted into the insertion slot 103 to mate and conduct current with the terminal 12.

In some embodiments, referring to FIGs. 4 to 6 together and in conjunction with other drawings, a cross-sectional area of the conductive connecting member 13 is greater than or equal to a sum of cross-sectional areas of the plurality of terminals 12.

It should be explained first herein that the connector 10 is configured to be plugged with the second connector 400 along a first direction Z to achieve mating conduction. The first direction Z is parallel to the Z axis shown in FIG. 4 and FIG. 6. The cross-sectional area of the conductive connecting member 13 refers to an area of a cross section of the conductive connecting member 13 perpendicular to the first direction Z. The cross-sectional area of the terminal 12 refers to an area of a cross section of the terminal 12 perpendicular to the first direction Z.

The current in the connector 10 generally flows along the first direction Z. As an example, as shown in FIG. 6, the conductive connecting member 13 is provided with the second mounting hole 102, and the terminal 12 is provided with an elastic portion 122 for mating conduction with the second connector 400. The second mounting hole 102 and the elastic portion 122 are generally disposed along the first direction Z, so that the current of the connector 10 generally flows along the first direction Z.

By setting the cross-sectional area of the conductive connecting member 13 to be greater than or equal to the sum of the cross-sectional areas of the plurality of terminals 12, the conductive connecting member 13 has a relatively large current-carrying capacity, and the current-carrying capacity of the conductive connecting member 13 is greater than or equal to the current-carrying capacity of the plurality of terminals 12. In this way, current can flow from the battery cell 20 to the conductive connecting member 13 that serves as the positive transmission terminal 40 of the connector 10, and then flow to the plurality of terminals 12 respectively, and each terminal 12 carries a relatively large current. The current may also converge at the plurality of terminals 12 and flow to the conductive connecting member 13 that serves as the negative transmission terminal 50 of the connector 10, that is, the conductive connecting member 13 may be used to carry the converged current of the plurality of terminals 12. Therefore, the connector 10 conducts current via a plurality of branches, so that the connector 10 can withstand a large current and can achieve the effect of high-current conduction, and the connector 10 may be applied to high-voltage and high-current application occasions.

In some embodiments, referring to FIG. 6 and in conjunction with other drawings, the conductive connecting member 13 may include a first conductive portion 131 and a plurality of second conductive portions 132, where the plurality of second conductive portions 132 are arranged at intervals on the first conductive portion 131. Each second conductive portion 132 is correspondingly connected to each terminal 12 to achieve conduction.

The cross-sectional area of the conductive connecting member 13 may include a cross-sectional area of the conductive connecting member 13 at the first conductive portion 131, and may also include a cross-sectional area of the conductive connecting member 13 at the second conductive portions 132. The cross-sectional area of the conductive connecting member 13 at the first conductive portion 131 refers to an area of a cross section of the first conductive portion 131 perpendicular to the first direction Z. The cross-sectional area of the conductive connecting member 13 at the second conductive portions 132 refers to a sum of areas of cross sections of the plurality of second conductive portions 132 perpendicular to the first direction Z.

As shown in FIG. 6, the plurality of terminals 12 are disposed at intervals along a second direction Y, and the plurality of second conductive portions 132 are disposed at intervals along the second direction Y. The second direction Y is parallel to the X axis in FIG. 6. The first direction Z is perpendicular to the second direction Y.

In some embodiments, referring to FIG. 6 and in conjunction with other drawings, the conductive connecting member 13 and the terminals 12 are in surface contact and connected to each other to achieve conduction between the conductive connecting member 13 and the terminals 12.

The surface contact between the conductive connecting member 13 and the terminals 12 enables a joint between the conductive connecting member 13 and the terminals 12 to have a relatively large current-carrying capacity. In this way, the terminals 12 may smoothly receive the relatively large current of the conductive connecting member 13, and the conductive connecting member 13 may also smoothly receive the relatively large current of the terminals 12, so that the current may smoothly flow between the terminals 12 and the conductive connecting member 13, thereby facilitating the connector 10 to conduct current through a plurality of branches and facilitating the improvement of the current-carrying capacity of the connector 10.

In some embodiments, referring to FIG. 6 and in conjunction with other drawings, both the conductive connecting member 13 and the terminals 12 are sheet-shaped. A portion of the terminal 12 and a portion of the conductive connecting member 13 are sequentially disposed and connected along a thickness direction of the terminals 12 to achieve conduction between the terminals 12 and the conductive connecting member 13.

The conductive connecting member 13 being sheet-shaped means that the conductive connecting member 13 is generally in a sheet-like structure. The terminal 12 being sheet-shaped means that the terminal 12 is generally in a sheet-like structure.

The conductive connecting member 13 and the terminals 12 are generally parallel, which means that a thickness direction of the conductive connecting member 13 and a thickness direction of the terminals 12 are generally parallel. The thickness direction mentioned below, unless otherwise specified, may be regarded as the thickness direction of the terminals 12 or the thickness direction of the conductive connecting member 13.

A portion of the terminal 12 and a portion of the conductive connecting member 13 are sequentially disposed and connected along the thickness direction of the terminals 12, which means that a portion of one surface of the terminals 12 along the thickness direction and a portion of one surface of the conductive connecting member 13 along the thickness direction are sequentially stacked. The one surface of the terminals 12 along the thickness direction is a largest surface of the terminals 12; the one surface of the conductive connecting member 13 along the thickness direction is a largest surface of the conductive connecting member 13. In this way, surface contact may be achieved between the terminals 12 and the conductive connecting member 13, and a large contact area exists between the conductive connecting member 13 and the terminals 12. In this way, a joint between the conductive connecting member 13 and the terminals 12 has a relatively large current-carrying capacity, which helps to improve the current-carrying capacity of the connector 10.

It should be additionally noted herein that the thickness direction of the terminals 12 and the thickness direction of the conductive connecting member 13 are both defined as a third direction X, and the third direction X is parallel to the Y axis in FIG. 5. The first direction Z is perpendicular to the third direction X, and the second direction Y is perpendicular to the third direction X.

In some embodiments, the conductive connecting member 13 and the terminals 12 are formed as separate components.

Such arrangement enables the conductive connecting member 13 and the terminals 12 to be formed separately, that is, the conductive connecting member 13 and the terminals 12 may be designed according to their respective requirements, which helps to improve the current-carrying capacity of the connector 10.

Alternatively, in some other embodiments, the conductive connecting member 13 and the terminals 12 are formed as an integral structure.

Such arrangement facilitates the molding of the connector 10.

In some embodiments, referring to FIG. 6 and in conjunction with other drawings, the conductive connecting member 13 and the terminals 12 are formed as separate components. The conductive connecting member 13 and the terminals 12 adopt at least one of welding, riveting, and bolting to achieve connection.

As an example, as shown in FIG. 6, the connector 10 further includes a fastener 14, where the fastener 14 may be, but is not limited to, a bolt and a rivet. The fastener 14 sequentially passes through the conductive connecting member 13 and the terminals 12 to achieve the connection between the conductive connecting member 13 and the terminals 12, thereby achieving conduction between the conductive connecting member 13 and the terminals 12. When the fastener 14 is a bolt, the fastener 14 is configured to achieve bolting connection between the conductive connecting member 13 and the terminals 12. When the fastener 14 is a rivet, the fastener 14 is configured to achieve riveting connection between the conductive connecting member 13 and the terminals 12.

By adopting the above technical solution, the separate connection between the conductive connecting member 13 and the terminals 12 is simple in structure, easy to implement and highly reliable.

In some embodiments, referring to FIGs. 4 to 6 together and in conjunction with other drawings, the conductive connecting member 13 is a copper busbar; or the terminals 12 are copper busbars; or the conductive connecting member 13 and the terminals 12 each serve as a copper busbar.

The copper busbar may be a bar made of pure copper material or a bar made of copper alloy.

The design of the conductive connecting member 13 being a copper busbar enables the conductive connecting member 13 to have a relatively large current-carrying capacity, facilitates the formation of parallel connection of the plurality of terminals 12, and facilitates improvement of the current-carrying capacity of the connector 10.

The design of the terminals 12 being copper busbars enables the terminal 12 to have a relatively large current-carrying capacity, which in turn can improve the current-carrying capacity of the connector 10.

In some embodiments, referring to FIGs. 4 to 6 together and in conjunction with other drawings, the terminal 12 includes a main body portion 121 and a plurality of elastic portions 122. The main body portion 121 is arranged on the housing 11, the plurality of elastic portions 122 are arranged at intervals on the main body portion 121, and the elastic portions 122 are capable of elastic deformation.

The main body portion 121 is a main section of the terminal 12. The elastic portion 122 is a component of the terminal 12 that is configured to elastically abut against a conductive component of the second connector 400 to conduct current. The elastic portion 122 has elastic performance. The main body portion 121 and the elastic portion 122 are both metal components and have conductive capability.

By arranging the plurality of elastic portions 122 on the terminal 12, the connector 10 can elastically abut against the conductive component of the second connector 400 via the plurality of elastic portions 122 to achieve a reliable conduction relationship between the terminals 12 and the second connector 400. In this way, the reliability and stability of conduction between the terminals 12 and the conductive component of the second connector 400 can be improved, that is, the reliability and stability of mating conduction between the connector 10 and the second connector 400 can be improved.

It should be additionally noted herein that the conductive connecting member 13 is connected to the main body portion 121 to conduct current.

It should be additionally noted herein that the cross-sectional area of the terminal 12 generally refers to the area of a cross section of the main body portion 121 of the terminal 12 perpendicular to the first direction Z.

In some embodiments, referring to FIGs. 4 to 6 together and in conjunction with other drawings, the elastic portion 122 is exposed at one end of the housing 11 along the first direction Z, so that the connector 10 and the second connector 400 can mate and conduct current. At least a portion of the conductive connecting member 13 is exposed at an end of the housing 11 away from the elastic portion 122 along the first direction Z, so that the conductive connecting member 13 is conveniently connected to the positive transmission terminal 40 or the negative transmission terminal 50 of the battery 100.

Referring to FIG. 2 and FIG. 3 together and in conjunction with other drawings, the battery 100 provided in the embodiments of the present application includes a connector 10, where the connector 10 is configured to transmit electrical power of the battery 100. The connector 10 in this embodiment is the same as the connector 10 in the previous embodiment. For details, reference may be made to the relevant description of the connector 10 in the previous embodiment, and details are not repeated herein.

The second connector 400 is configured to connect to the terminals 12 of the connector 10, so that the connector 10 and the second connector 400 achieve mating conduction.

Specifically, the battery 100 has a positive transmission terminal 40 and a negative transmission terminal 50, where at least one of the positive transmission terminal 40 and the negative transmission terminal 50 serves as the connector 10.

The battery 100 provided in the embodiments of the present application can achieve the effect of high-current power supply by adopting the foregoing connector 10.

As an example, the positive transmission terminal 40 of the battery 100 serves as the connector 10, the positive transmission terminal 40 is connected to the corresponding second connector 400, and the second connector 400 is connected to the electric device. The negative transmission terminal 50 of the battery 100 serves as the connector 10, the negative transmission terminal 50 is connected to the corresponding second connector 400, and the second connector 400 is connected to the electric device. Based on this, the battery 100 is connected to the electric device via the connector 10 and the second connector 400, so that the electric device and the battery 100 form a loop, and the battery 100 may supply power to the electric device via the connector 10.

Referring to FIG. 3, the energy storage system 1000 provided in the embodiments of the present application includes a battery 100 and a control device 500. The battery 100 in this embodiment is the same as the battery 100 in the previous embodiment. For details, reference may be made to the relevant description of the battery 100 in the previous embodiment, and details are not repeated herein.

The control device 500 is connected to the connector 10 of the battery 100.

The control device 500 may be, but is not limited to, a main control box, a high-voltage box, a control cabinet, and the like with power control functions.

Specifically, the battery 100 has a positive transmission terminal 40 and a negative transmission terminal 50, and the control device 500 is electrically connected to the positive transmission terminal 40 and the negative transmission terminal 50 separately. At least one of the positive transmission terminal 40 and the negative transmission terminal 50 serves as the connector 10, so that the control device 500 is connected to the connector 10 of the battery 100.

As an example, referring to FIG. 3, the positive transmission terminal 40 and the negative transmission terminal 50 of the battery 100 each serve as the connector 10. The positive transmission terminal 40 of the battery 100 mates and conducts current with the corresponding second connector 400 to form a set of connector assembly and is connected to the positive electrode of the control device 500. The negative transmission terminal 50 of the battery 100 also mates and conducts current with the corresponding second connector 400 to form a set of connector assembly and is connected to the negative electrode of the control device 500.

The second connector 400 connected to the positive transmission terminal 40 and the positive electrode of the control device 500 may alternatively be connected via another connector assembly, and the second connector 400 connected to the negative transmission terminal 50 and the negative electrode of the control device 500 may alternatively be connected via another connector assembly.

In the energy storage system 1000, the batteries 100 may be provided in one or may be provided in multiple.

The energy storage system 1000 provided in the embodiments of the present application enables the connector 10 to achieve the effect of high-current conduction by adopting the foregoing battery 100, which is convenient for the energy storage system 1000 to provide a relatively larger current supply power to an electric device. Moreover, the electric device may be connected to the control device 500, so that the control device 500 may control the battery 100 to supply power to the electric device.

In some embodiments, continue to refer to FIG. 3 and in conjunction with other drawings, the battery 100 is provided in multiple, and the plurality of batteries 100 are electrically connected via the connector 10 to form a battery assembly. The battery assembly has a total positive terminal 40a and a total negative terminal 50a, and the control device 500 is electrically connected to the total positive terminal 40a and the total negative terminal 50a. Only the total positive terminal 40a serves as the connector 10; or only the total negative terminal 50a serves as the connector 10; or the total positive terminal 40a and the total negative terminal 50a each serve as the connector 10.

The plurality of batteries 100 being electrically connected via the connector 10 may be that the plurality of batteries 100 are connected in series, or that the plurality of batteries 100 are connected in parallel, or that the plurality of batteries 100 form a hybrid connection relationship with both series and parallel connections, so that the plurality of batteries 100 form a battery assembly.

The plurality of batteries 100 being electrically connected via the connector 10 means that two adjacent batteries 100 are connected at least via the connector 10. As an example, in two adjacent batteries 100, the positive transmission terminal 40 of one battery 100 is connected to the negative transmission terminal 50 of the other battery 100 to achieve series connection of the two batteries 100, and at least one of the positive transmission terminal 40 and the negative transmission terminal 50 serves as the connector 10. As another example, as shown in FIG. 3, in two adjacent batteries 100, the positive transmission terminal 40 of one battery 100 is connected to the corresponding second connector 400, the negative transmission terminal 50 of the other battery 100 is connected to the corresponding second connector 400, and the second connectors 400 of the two batteries 100 are connected to achieve series connection of the two batteries 100.

In the battery assembly, when the plurality of batteries 100 are electrically connected, there is one battery 100 whose positive transmission terminal 40 is not electrically connected to other batteries 100, and the positive transmission terminal 40 of the battery 100 constitutes the total positive terminal 40a of the battery assembly; and there is also one battery 100 whose negative transmission terminal 50 is not electrically connected to other batteries 100, and the negative transmission terminal 50 of the battery 100 constitutes the total negative terminal 50a of the battery assembly.

The total positive terminal 40a is connected to the positive electrode of the control device 500, and the total negative terminal 50a is connected to the negative electrode of the control device 500.

As an example, as shown in FIG. 3, the total positive terminal 40a and the total negative terminal 50a each serve as the connector 10. The total positive terminal 40a is connected to the corresponding second connector 200, and the second connector 400 and the positive electrode of the control device 500 are connected via another connector assembly. The total negative terminal 50a is connected to the corresponding second connector 200, and the second connector 400 and the negative electrode of the control device 500 are connected via another connector assembly.

Such arrangement enables the electric device to be connected to the control device 500, so that the control device 500 may control the plurality of batteries 100 to supply power to the electric device. Through the arrangement of the connector 10, the control device 500 may control the battery 100 to provide a relatively large current supply power to the electric device.

Referring to FIG. 1, the electric device provided in the embodiments of the present application includes a battery 100, and the battery 100 is configured to supply power to the electric device.

The electric device provided in the embodiments of the present application enables the battery 100 of the electric device to achieve the effect of supplying a large current to the electric device by adopting the foregoing battery 100.

As one embodiment of the present application, as shown in FIGs. 4 to 6, the connector 10 includes a housing 11, a conductive connecting member 13, and a plurality of terminals 12. The plurality of terminals 12 are disposed at intervals in the housing 11, and each terminal 12 is exposed outside the housing 11. The conductive connecting member 13 is connected to the plurality of terminals 12, so that the plurality of terminals 12 are arranged in parallel.

The above are merely optional embodiments of the present application and are not intended to limit the present application. For those skilled in the art, the present application can have various modifications and changes. Any modifications, equivalent replacements, improvements, and the like made within the spirit and principles of the present application shall be included in the scope of the claims of the present application.

## Claims

1. A connector, comprising:
a housing; and
a plurality of terminals arranged in parallel inside the housing.

2. The connector according to claim 1, wherein the connector further comprises a conductive connecting member, and the conductive connecting member connects the plurality of terminals to arrange the plurality of terminals in parallel.

3. The connector according to claim 2, wherein a cross-sectional area of the conductive connecting member is greater than or equal to a sum of cross-sectional areas of the plurality of terminals.

4. The connector according to claim 2 or 3, wherein the conductive connecting member and the terminals are in surface contact and connected to each other.

5. The connector according to any one of claims 2 to 4, wherein both the conductive connecting member and the terminal are sheet-shaped, and a portion of the terminal and a portion of the conductive connecting member are sequentially disposed and connected along a thickness direction of the terminal.

6. The connector according to any one of claims 2 to 5, wherein the conductive connecting member and the terminal are formed as separate components or an integral structure.

7. The connector according to claim 6, wherein the conductive connecting member and the terminal are formed as separate components, and the conductive connecting member and the terminal are connected by welding and/or riveting and/or bolting.

8. The connector according to any one of claims 2 to 7, wherein the conductive connecting member and/or the terminal is a copper busbar.

9. The connector according to any one of claims 2 to 8, wherein the conductive connecting member comprises a first conductive portion and a plurality of second conductive portions, wherein the plurality of second conductive portions are arranged at intervals on the first conductive portion; and each of the second conductive portions is correspondingly connected to each of the terminals.

10. The connector according to any one of claims 1 to 9, wherein the terminal comprises:
a main body portion arranged on the housing; and
a plurality of elastic portions arranged at intervals on the main body portion and capable of elastic deformation.

11. The connector according to any one of claims 1 to 10, wherein the housing is an insulating structure.

12. The connector according to any one of claims 1 to 11, wherein the terminal is provided with a barb, a clamping groove is formed in the housing, and the barb is clamped inside the clamping groove; and the housing is provided with an insertion slot, at least a portion of the terminal is arranged in the insertion slot, and the clamping groove is formed on an inner wall of the insertion slot.

13. A battery, comprising the connector according to any one of claims 1 to 12, wherein the connector is configured to transmit electrical power of the battery.

14. An energy storage system, comprising a control device and the battery according to claim 13, wherein the control device is electrically connected to the connector of the battery.

15. The energy storage system according to claim 14, wherein the battery is provided in multiple, the plurality of batteries are electrically connected through the connector to form a battery assembly; the battery assembly has a total positive terminal and a total negative terminal, the control device is electrically connected to the total positive terminal and the total negative terminal, and the total positive terminal and/or the total negative terminal serves as the connector.

16. An electric device, comprising the battery according to claim 13.
